# EUROPÄISCHE PATENTSCHRIFT

(11) **EP 1 989 011 B1**
(45) Veröffentlichungstag und Bekanntmachung des Hinweises auf die Patenterteilung: **29.09.2010**
(21) Anmeldenummer: 07701327.4
(22) Anmeldetag: 15.02.2007
(51) Int. Cl.: B21D 41/04, B21D 53/88, B62D 1/185, F16D 1/072

(54) **VERFAHREN ZUR HERSTELLUNG EINES LENKSPINDELTEILS UND LENKSPINDEL MIT EINEM SOLCHEN LENKSPINDELTEIL**
METHOD OF PRODUCING A STEERING GEAR SHAFT PART AND STEARING GEAR SHAFT HAVING SUCH A STEERING GEAR SHAFT PART
PROCEDE DE FABRICATION D'UNE PIECE DE COLONNE DE DIRECTION ET COLONNE DE DIRECTION DOTEE DE CETTE PIECE DE COLONNE DE DIRECTION

(30) Priorität: 02.03.2006 DE 102006010228
(43) Veröffentlichungstag der Anmeldung: 12.11.2008
(73) Patentinhaber: ThyssenKrupp Presta Aktiengesellschaft, 9492 Eschen (LI)
(72) Erfinder: ALLGÄUER, Rene, A-6844 Altach (AT)
(74) Vertreter: Hofmann, Ralf U.
(86) Internationale Anmeldenummer: PCT/AT2007/000083
(87) Internationale Veröffentlichungsnummer: WO 2007/098513

(56) Entgegenhaltungen:
- EP-A1- 0 024 986
- DE-A1- 10 347 101
- FR-A1- 2 473 975
- FR-A1- 2 508 860
- US-A- 4 819 961

## Beschreibung

Die Erfindung betrifft ein Verfahren zur Herstellung eines Lenkspindelteils, welches einen Abschnitt einer Lenkspindel für ein Kraftfahrzeug bildet und in Form einer Hohlwelle ausgebildet ist und zumindest anschließend an eines seiner Enden einen Verbindungsabschnitt aufweist, der zumindest über einen Teil seiner Länge eine gegenüber einem an den Verbindungsabschnitt anschließenden Abschnitt des Lenkspindelteils vergrößerte Wandstärke aufweist, wobei zur Herstellung des Lenkspindelteils ein zunächst hohlzylinderförmiges Rohr als Ausgangsprodukt verwendet wird, das zumindest abschnittsweise umgeformt wird.

Lenkspindeln von Kraftfahrzeugen weisen üblicherweise mehrere Lenkspindelteile auf, die jeweils einen Abschnitt der Lenkspindel bilden. Am bezogen auf die Fahrtrichtung hintersten Lenkspindelabschnitt ist an dessen hinterem Ende das Lenkrad festgelegt. Am bezogen auf die Fahrtrichtung vordersten Lenkspindelabschnitt ist an dessen vorderem Ende häufig ein Ritzel zum Eingriff in das Lenkgetriebe festgelegt. Neben Lenkspindelteilen, die über Kardangelenke miteinander verbunden sind, sind gegeneinander verschiebbare (teleskopierbare) Lenkspindelteile vorhanden, welche zur Einstellung der Länge der Lenksäule und/oder zur Aufnahme von Längsverschiebungen im Crashfall dienen.

Die Verbindung des Lenkrades mit dem hintersten Lenkspindelteil erfolgt bei einer bekannten Ausführungsform mittels einer Verschraubung. Hierzu besitzt das in Form einer Hohlwelle ausgebildete Lenkspindelteil endseitig einen Verbindungsabschnitt, welcher ausgehend vom Ende des Lenkspindelteils einen im Wesentlichen hohlzylindrischen Abschnitt und anschließend an diesen einen konischen Abschnitt, der sich zur Mitte des Lenkspindelteils hin erweitert, aufweist. Der hohlzylindrische Abschnitt ist mit einem Innengewinde und einer Außenverzahnung versehen. Die Außenverzahnung greift in eine Innenverzahnung der Nabe des Lenkrads ein und mittels des Innengewindes erfolgt die Verschraubung des Lenkrads am Lenkspindelteil. Das Lenkspindelteil muss hierbei im Verbindungsabschnitt, insbesondere im hohlzylindrischen Endabschnitt eine ausreichend große Wandstärke aufweisen. Diese ist größer als die zur Übertragung des Drehmoments erforderliche Wandstärke über die restliche Länge des Lenkspindelteils. Herkömmlicherweise werden daher zur Ausbildung des Lenkspindelteils Rohre verwendet, die zunächst eine größere Wandstärke aufweisen, als sie - abgesehen vom Verbindungsabschnitt - erforderlich ist. Es erfolgt dann eine Bearbeitung des Rohrs über seine gesamte Längsausdehnung, insbesondere durch Hämmern oder ein ähnliches Umformverfahren, beispielsweise Kneten. Im Verbindungsabschnitt wird hierbei der Durchmesser des Rohrs verringert. Über die restliche Länge des Rohrs wird die Wandstärke des Rohrs verringert. Weiters können hierbei auch über Abschnitte des Rohrs Strukturen eingebracht werden, die beispielsweise zur teleskopierbaren, aber unverdrehbaren Verbindung mit einem weiteren Lenkspindelteil dienen. Die Ausbildung von solchen Konturen, insbesondere in Form von Bogenverzahnungen oder Kleeblattprofilen ist bekannt. Beispielsweise zeigt die DE 197 50 005 C1 Lenkspindelteile mit derartigen Konturen.

Aufgrund der erforderlichen Umformung des Rohrs über seine gesamte Länge ist dieser Prozess sehr arbeitsaufwendig und auch schwer beherrschbar.

Es ist zwar möglich, die Wandstärke eines Rohrs durch Hämmern aufzudicken. Aufgrund der eine solche Aufdickung imitierenden Faktoren muss aber dennoch ein Rohr als Ausgangsprodukt eingesetzt werden, das eine größere Wandstärke besitzt, als dies für die erforderliche Drehmomentübertragung notwendig wäre. Dadurch wird das Lenkspindelteil insgesamt schwer oder das Rohr muss wiederum über seine gesamte Länge bearbeitet werden, um die Wandstärke abgesehen vom Verbindungsabschnitt entsprechend zu verringern.

Die DE 10 2004 009 188 A1 zeigt zwei teleskopierbar miteinander verbundene Lenkspindelteile, die im Längsschnitt gesehen komplizierte Konturen mit unterschiedlichen Dickenbereichen ihrer Wandstärken aufweisen, wobei an ihren voneinander entfernten Enden Verbindungsabschnitte zur Verbindung mit einem Lenkrad bzw. einem Lenkgetriebe vorgesehen sind. Solche Wandstärkenprofile können durch umformende Bearbeitungen von Rohren über ihre gesamten Längen ausgebildet werden.

Eine Befestigung eines Lenkrades an einer Lenkwelle mittels einer quer zur Achse der Lenkspindel angeordneten Schraube, die mit einem Haltekonus zusammenwirkt und diesen in einer Ausnehmung der Lenkradnabe verschiebt und gegen die Lenkwelle verspannt, ist aus der EP 1 138 575 B1 bekannt. Das Lenkspindelteil, an welchem das Lenkrad endseitig befestigt wird, ist hier massiv ausgebildet, könnte aber auch als Hohlwelle mit einer ausreichend dicken Wandstärke ausgebildet sein.

Eine weitere Befestigung eines Lenkrades am Ende des an das Lenkrad anschließenden Lenkspindelteils ist aus der US 4,819,961 A bekannt. Das als Hohlwelle ausgebildete Lenkspindelteil besitzt endseitig einen Verbindungsabschnitt, in welchem sich das Rohr des Lenkspindelteils zu seinem Ende hin zunächst konisch verjüngt und daran anschließend noch einen hohlzylindrischen Abschnitt mit einer Innenverzahnung aufweist. Im Verbindungsabschnitt ist ein Klemmstück angeordnet, dessen Außenkontur der Innenkontur des Rohrs entspricht und welches endseitig aus dem Rohr herausragt. Es weist erste und zweite Außenverzahnungen auf, die einerseits mit der Innenverzahnung des Rohrs und andererseits mit einer Innenverzahnung der Lenkradnabe zusammenwirken, und besitzt weiters ein Innengewinde, in welches eine an der Lenkradnabe angreifende Schraube eingeschraubt ist, um die Teile miteinander zu verspannen. Durch das massive, in den Verbindungsabschnitt eingesetzte Spannstück kann die Wandstärke des Lenkspindelteils über seine Länge konstant ausgebildet sein. Bei einer derartigen Klemmverbindung besteht die Gefahr, dass sich die aufgebrachten Klemmkräfte im Laufe der Zeit verringern, wodurch es zu einem unerwünschten Spiel kommen kann. Weiters muss das Klemmstück von der lenkradfernen Seite durch das Lenkspindelteil eingeführt werden. Das Lenkspindelteil darf somit keine Bereiche mit verringertem Querschnitt aufweisen, z.B. um eine teleskopierbare, Drehmoment übertragende Verbindung mit einem weiteren Lenkspindelteil auszubilden. Weiters kann das Klemmstück bei einem Abnehmen des Lenkrades ins Innere des Lenkspindelteils rutschen, wo es in der Folge unzugänglich ist.

Die DE 103 47 101 A1 offenbart in allgemeiner Weise das Verbinden von zwei rohrförmigen Bauteilen mittels Außenhochdruckumformens. In der Beschreibung wird dargelegt, dass bei diesem Umformen das Außenrohr plastisch und das Innenrohr elastisch verformt werden.

Die EP 0 024 986 A1 offenbart ein Verfahren wie fluidführende Leitungen für Flugzeuge und dergleichen im Bereich der Verbindung zwischen zwei Leitungsabschnitten verstärkt werden können, indem innen oder außen auf das Leitungsrohr eine Verstärkungshülse aufgeschoben wird. Das Leitungsrohr und die Hülse werden gemeinsam geweitet.

Die FR 2 473 975 zeigt eine Lenksäule, bei der zur Verstärkung eines oberen Abschnittes der Lenksäule zur Vergrößerung der Wandstärke ein inneres Rohr in einem äußeren Rohr angeordnet ist. Zur Befestigung des inneren Rohres im äußeren Rohr ist vorgesehen, dass das äußere Rohr durch mechanische Mittel in Berührung mit dem inneren Rohr gebracht wird. Das innere Rohr weist darüber hinaus einen sich verjüngenden Teil auf, welcher in Berührung mit dem äußeren Rohr steht. Die beiden so miteinander in Kontakt stehenden Rohre wirken wie ein Rohr mit einer Wandstärke die gleich der zusammengesetzten Wandstärke der beiden verwendeten Rohre ist, solange die Rohre einer Biegespannung unterworfen sind.

Die in der FR 2 473 975 vorgeschlagene Konstruktion bringt aber dann nicht mehr den gewünschten Verstärkungseffekt, wenn neben Biegespannungen auch Zug- und Druckspannungen, Befestigungsspannungen oder Drehmomente durch die Rohr-in-Rohr-Kombination aufgenommen werden soll.

Aufgabe der vorliegenden Erfindung ist es daher, ein Verfahren zur Herstellung eines Lenkspindelteils bereit zu stellen, welches einfach und kostengünstig durchführbar ist und eine hohe Widerstandskraft des Lenkspindelteils gegen Biege-, Zug- und Druckspannungen sowie auch eine ausreichende Stabilität bei der Aufbringung von größeren Drehmomenten bereitstellt.

Erfindungsgemäß gelingt dies durch ein Verfahren mit den Merkmalen des Anspruchs 1.

Beim erfindungsgemäßen Verfahren kann ein handelsübliches hohlzylindrisches Rohr als Ausgangsprodukt für die Herstellung des Lenkspindelteils herangezogen werden. In einen Endabschnitt dieses Rohrs wird zur Ausbildung des Verbindungsabschnitts eine, außen vor ihrem Einpressen in den Endabschnitt des Rohrs mit einer Rändelung bzw. Umfangsverzahnung versehene Hülse eingepresst. Im Weiteren werden der Endabschnitt des Rohrs und die Hülse gemeinsam umgeformt, vorzugsweise durch Hämmern und/oder Kneten, wobei die Endkontur des Verbindungsabschnitts ausgebildet wird und gleichzeitig eine ausreichend starke Verbindung zwischen dem Rohr und der Hülse erzielt wird. Durch die gemeinsame Umformung des Endabschnitts des Rohrs und der Hülse kann eine starke kraftschlüssige Verbindung zwischen dem Rohr und der Hülse erzielt werden. Dadurch kann ein nach dem Einpressen der Hülse in das Rohr bereits vorhandener Reibschluss (Kraftschluss) noch verstärkt werden. Weiters kann bei dieser Umformung günstigerweise ein gegen ein Herausziehen der Hülse aus dem Ende des Rohrs wirkender Formschluss zwischen dem Rohr und der Hülse ausgebildet werden.

In die so ausgebildete Kontur des Verbindungsabschnitts können die gewünschten weiteren Verbindungselemente eingebracht werden, beispielsweise ein Innengewinde an der Innenwand der Hülse und/oder eine spezielle Umfangskontur, wie beispielsweise ein Dreieck, Sechseck oder Achteck oder eine Verzahnung. Eine derartige Kontur wird beispielsweise zur Ausbildung einer guten Verbindung mit einer korrespondierenden Innenkontur einer Nabe eines Lenkrades oder einer Gabel für ein Universalgelenk oder eines Lenkritzels ausgebildet.

Die Wandstärke des aus Ausgangsprodukt verwendeten hohlzylindrischen Rohrs kann derart ausgewählt werden, dass gerade eine ausreichende Stabilität des Lenkspindelteils, insbesondere für die erforderliche Übertragung des Drehmoments erhalten wird. Eine umformende Bearbeitung des Rohrs über seine gesamte Länge, um abseits des Verbindungsabschnitts eine gewünschte, dünnere Wandstärke zu erzielen, ist somit nicht erforderlich. Durch die in den Endabschnitt des Rohrs eingesetzte Hülse wird im Verbindungsabschnitt eine ausreichend große Wandstärke erreicht.

Nach oder vor oder auch im selben Arbeitsgang - bzw. in der derselben Aufspannung des Ausgangsrohres - der Umformung im Verbindungsabschnitt können über weitere Abschnitte des Rohrs, in welchen gegenüber der ursprünglichen hohlzylindrischen Form abweichende Geometrien benötigt werden, entsprechende Materialumformungen durchgeführt werden, beispielsweise zur Ausbildung von umfänglichen Bogenverzahnungen bzw. Kleeblattprofilen, um eine verschiebbare, aber Drehmoment übertragende Verbindung mit einem weiteren Lenkspindelteil auszubilden.

Außer Hämmern und Kneten können zur Umformung des Lenkspindelteils im Verbindungsabschnitt auch andere Umformverfahren eingesetzt werden, insbesondere andere Arten des Druckumformens, beispielsweise Walzen.

Weitere Vorteile und Einzelheiten der Erfindung werden im Folgenden anhand der beiliegenden Zeichnung erläutert. In dieser zeigen:
- Fig. 1: ein Lenkspindelteil entsprechend dem Stand der Technik im Längsschnitt;
- Fig. 2: eine dreidimensionale Darstellung eines hohlzylindrischen Rohrs und einer Hülse als Ausgangsprodukte für ein erfindungsgemäßes Lenkspindelteil;
- Fig. 3: einen Längsschnitt durch das Rohr und die Hülse;
- Fig. 4: eine dreidimensionale Darstellung nach dem Einsetzen der Hülse in das Rohr;
- Fig. 5: einen Längsschnitt in diesem Fertigungsstadium;
- Fig. 6: einen vergrößerten Ausschnitt von Fig. 5;
- Fig. 7: eine dreidimensionale Darstellung des fertiggestellten Lenkspindelteils gemäß der Erfindung;
- Fig. 8: einen Längsschnitt durch dieses fertiggestellte Lenkspindelteil;
- Fig. 9: einen vergrößerten Ausschnitt von Fig. 8;
- Fig. 10: eine dreidimensionale Darstellung einer weiteren Ausführungsform des fertiggestellten Lenkspindelteils gemäß der Erfindung.

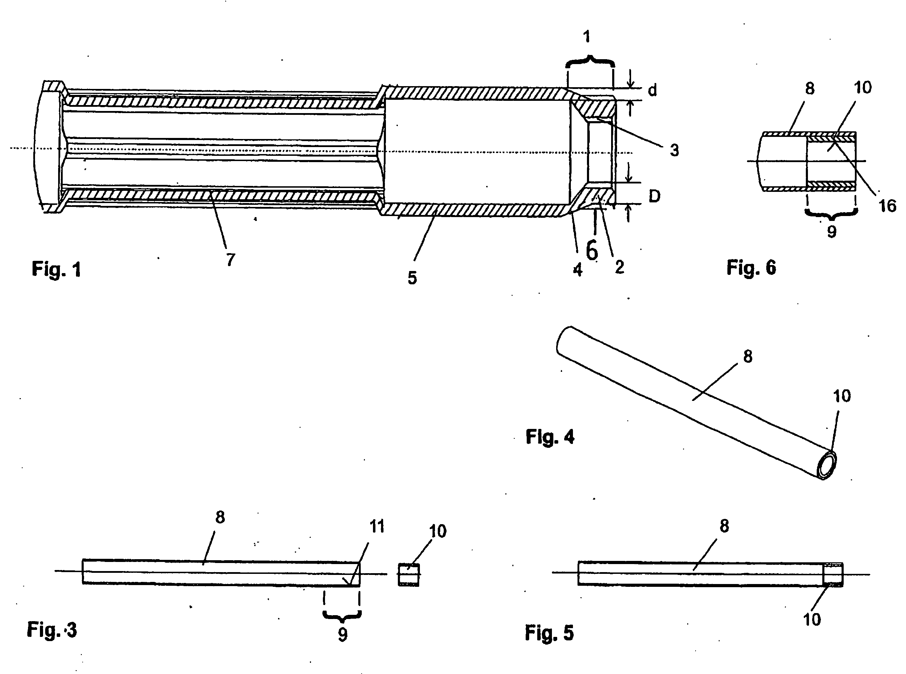

Ein Lenksäulenteil nach dem Stand der Technik wird zunächst anhand von Fig. 1 erläutert. Es handelt sich hierbei um das bezogen auf die Fahrtrichtung hinterste Lenkspindelteil einer Lenkspindel für ein Kraftfahrzeug, an welchem endseitig ein Lenkrad anzubringen ist. Das Lenkspindelteil weist zu diesem Zweck an dem dem Lenkrad zugewandten Ende einen Verbindungsabschnitt 1 auf. Ausgehend vom Ende des Lenkspindelteils umfasst dieser Verbindungsabschnitt 1 einen hohlzylindrischen Abschnitt 2, in welchem ein Innengewinde 3 und eine Außenverzahnung 6 ausgebildet sind, und daran zur Mitte des Lenkspindelteils hin anschließend einen konisch sich erweiternden Abschnitt 4. Insbesondere im hohlzylindrischen Abschnitt 2 ist die Wandstärke D größer als die Wandstärke d in einem an den Verbindungsabschnitt 1 anschließenden Abschnitt 5 des Lenkspindelteils.

Zur Verbindung des nicht dargestellten Lenkrads mit dem Lenkspindelteil wird das Lenkrad auf den Verbindungsabschnitt 1 aufgeschoben, wobei es mit einer konischen Innenwand am konischen Abschnitt 4 zur Anlage gelangt und mit einer Innenverzahnung in die Außenverzahnung 6 eingreift. Weiters wird das Lenkrad mittels einer in das Innengewinde 3 eingeschraubten Schraube mit dem Lenkspindelteil verschraubt.

Auf der vom Verbindungsabschnitt 1 abgelegenen Seite weist das Lenkspindelteil einen Abschnitt 7 auf, in welchem es mit einer von einem Kreisbogen abweichenden Kontur versehen ist, um eine in Längsrichtung des Lenkspindelteils verschiebbare (teleskopierbare) aber Drehmoment übertragende Verbindung mit einem weiteren Lenkspindelteil auszubilden. Der Abschnitt 7 kann insbesondere mit einer umfänglichen Bogenverzahnung bzw. einem Kleeblattprofil ausgebildet sein.

Zur Herstellung dieses Lenkspindelteils wird als Ausgangsprodukt ein Rohr eingesetzt, welches den im Bereich des Abschnitts 5 vorliegenden Durchmesser und eine Wandstärke aufweisen, die der Wandstärke D im Verbindungsabschnitt 1 entspricht. Zumindest ist diese anfängliche Wandstärke größer als die Wandstärke d im Abschnitt 5, welche zur Übertragung des Drehmoments noch ausreichend ist, da andernfalls im Verbindungsabschnitt 1 keine ausreichende Wandstärke ausbildbar ist. Dieses Rohr wird zur Herstellung des Lenkspindelabschnitts somit über seine gesamte Längsausdehnung umformend bearbeitet, insbesondere durch Hämmern und/oder Kneten. Würde das Rohr in den Abschnitten 5 und 7 mit seiner ursprünglichen Wandstärke belassen werden, so würde dies zu einem erheblichem Mehrbedarf an Material und entsprechend zu einem hohen Gewicht des Lenkspindelteils führen.

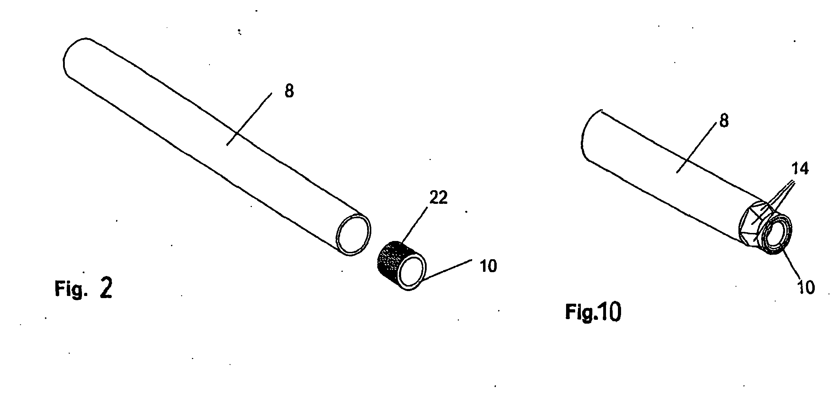

Ein Ausführungsbeispiel der Ausbildung eines Lenkspindelteils gemäß der Erfindung wird im Folgenden anhand der Fig. 2 bis 9 erläutert.

Als Ausgangsprodukt für das in Form einer Hohlwelle auszubildende Lenkspindelteil, welches einen Abschnitt der Längserstreckung einer Lenksäule für ein Kraftfahrzeug bildet, wird ein hohlzylindrisches Rohr 8 verwendet, d.h. das Rohr 8 weist über seine gesamte Längserstreckung eine gleichförmige Wandstärke auf. Die Wandstärke des Rohrs 8 wird nur so groß gewählt, wie dies für die insgesamte Stabilität des Lenkspindelteils, insbesondere zur Übertragung der auftretenden Drehmomente, erforderlich ist.

In einen Endabschnitt 9 des Rohrs 8, der nach wie vor die ursprüngliche hohlzylindrische Form hat, wird eine ebenfalls hohlzylindrische Hülse 10 eingesetzt, wobei die Hülse 10 mit ihrer Außenwand beim Einsetzen in den Endabschnitt des Rohrs 8 an der Innenwand 11 des Rohrs 8 umfänglich zur Anlage kommt. Um einen die nachfolgende Bearbeitung erleichternden reibschlüssigen Sitz der Hülse 10 im Endabschnitt 9 des Rohrs 8 zu erzielen, wird die Hülse 10 reibschlüssig in den Endabschnitt 9 des Rohrs 8 eingepresst. Vorzugsweise sind das Ende des Rohrs 8 und das Ende der Hülse 10 nach deren Einpressen in das Rohr 8 zueinander bündig. Das herzustellende Lenkspindelteil in diesem Fertigungszustand ist in den Fig. 4 bis 6 dargestellt.

In Fig. 2 ist zu sehen, dass die Hülse 10 außen vor ihrem Einpressen in den Endabschnitt 9 des Rohres 8 mit einer Rändelung bzw. Umfangsverzahnung versehen ist. Beim Einpressen der Hülse 10 kommt es zu Einkerbungen an der Innenwand des Rohres 8 im Endabschnitt 9, wodurch ein gegen eine Verdrehung wirkender Formschluss erzielt wird.

Zur Ausbildung des Verbindungsabschnitts 12 des Lenkspindelteils werden im Weiteren der Endabschnitt 9 des Rohrs und die Hülse10 gemeinsam umgeformt, beispielsweise durch Freiformumformen, vorzugsweise durch Hämmern. Die Umformenergie wird somit durch die kinetische Energie eines Schlages zugeführt. Dies wird auch als "dynamisches Schmieden" bezeichnet. Der Endabschnitt 9 des Rohrs 8 und die Hülse 10 können hierbei angewärmt werden oder das Hämmern kann ohne ein solches Anwärmen durchgeführt werden.

Anstelle des genannten Hämmerns oder zusätzlich hierzu kann auch ein Druckumformen des Endabschnitts 9 des Rohrs 8 und der Hülse 10 durch Kneten durchgeführt werden. Anstelle der oder zusätzlich zu den genannten Druckumform-Verfahren könnten auch andere Arten des Druckumformens eingesetzt werden, beispielsweise Walzen.

In einer weiteren Alternative oder auch in Kombination mit einem oder mehreren der bereits genannten Verfahren kann der Verbindungsabschnitt 12 auch durch Pressen mit zwei oder mehr Werkzeugteilen umgeformt werden. Derartige Werkzeugteile werden von außen auf den äußeren Umfang des Verbindungsabschnitts 12 zugeführt und pressen dabei das Rohr 8 mit der eingelegten Hülse 10 in die gewünschte Form. Dabei können auch sehr einfach nichtumlaufende Einkerbungen in den Verbindungsabschnitt 12 eingebracht werden.

Bei der gemeinsamen Umformung des Endabschnitts 9 des Rohrs 8 und der Hülse 10 werden ihre Außen- und Innendurchmesser zumindest über einen Abschnitt ihrer gemeinsamen Längserstreckung verringert. Im gezeigten Ausführungsbeispiel wird ausgehend vom Ende des Rohrs zunächst ein hohlzylinderförmiger Abschnitt 13 und an diesen zur Rohrmitte hin anschließend ein konischer Abschnitt 14 ausgebildet, der sich zum benachbarten Ende des Rohrs 8 hin verjüngt. Im gezeigten Ausführungsbeispiel schließt an den konischen Abschnitt 14 nochmals ein hohlzylinderförmiger Abschnitt 15 an, in welchem der Außen- und Innendurchmesser des Rohrs 8 und der Hülse 10 ihren ursprünglichen Wert aufweisen (hier wurde nach dem Einpressen der Hülse 10 keine umformende Materialbearbeitung durchgeführt). Im konischen Abschnitt 14 und endseitigen hohlzylinderförmigen Abschnitt 13 sind der Innen- und Außendurchmesser des Rohrs 8 und der Hülse 10 dagegen gegenüber ihrem ursprünglichen Wert verringert. Der hohlzylinderförmige Abschnitt 15 könnte auch entfallen.

Durch das bei der Umformung erfolgende Fließen des Materials des Rohrs 8 und der Hülse 10 wird deren kraftschlüssige Verbindung verstärkt. Weiters wird bei der Ausbildung des Verbindungsabschnitts 12 gemäß dem gezeigten Ausführungsbeispiel ein gegen ein Herausziehen der Hülse 10 aus demjenigen Ende des Rohrs 8, bei welchem die Hülse 10 angeordnet ist, wirkender Formschluss zwischen dem Rohr 8 und der Hülse 10 ausgebildet, wie dies bevorzugt ist. Der Formschluss wird im Ausführungsbeispiel durch den konischen Abschnitt 14 ausgebildet.

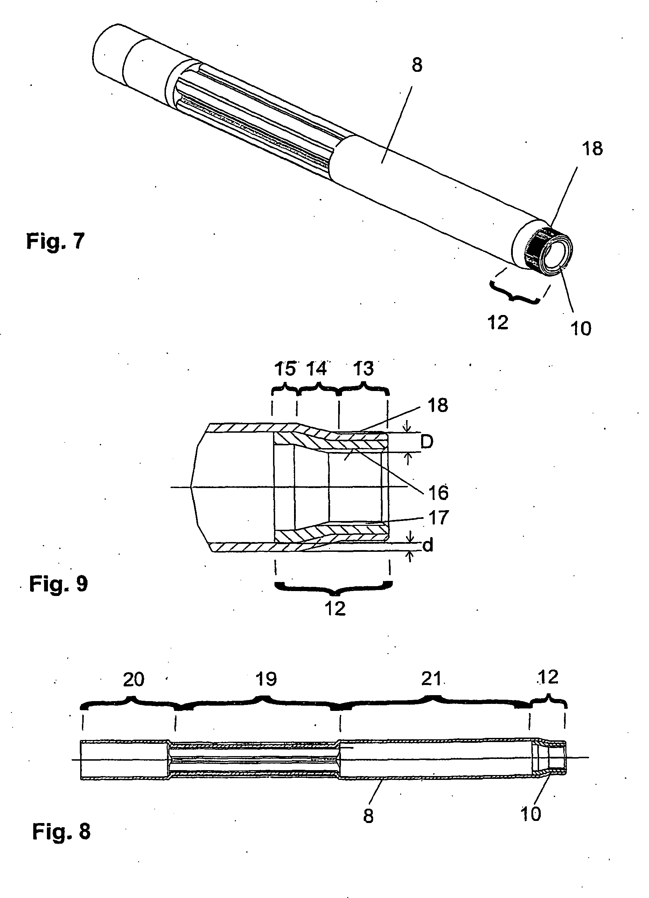

In einem an das Ende des Lenkspindelteils anschließenden Abschnitt, der sich im gezeigten Ausführungsbeispiel etwas weiter als der hohlrylinderförmige Abschnitt 13 erstreckt, ist die Innenwand 16 der Hülse 10 nach der gemeinsamen Umformung des Endabschnitts 9 des Rohrs 8 und der Hülse 10 zylindermantelförmig ausgebildet. In diese zylindermantelförmig ausgebildete Innenwand 16 der Hülse 10 wird in der Folge ein Innengewinde 17 eingebracht. Weiters wird die Außenwand der Hülse 10 im Bereich des hohlzylinderförmigen Abschnitts 13 mit einer Außenverzahnung 18 versehen, deren Zahnkämme sich in Längsrichtung des Lenkspindelteils erstrecken. Der fertiggestellte Verbindungsabschnitt 12 ist aus den Fig. 7 bis 9 ersichtlich.

Das Lenkspindelteil 1 ist weiters über einen Abschnitt 19 seiner Längserstreckung mit einem von einer Kreisform abweichenden Profil versehen, welches hier in Form einer umfänglichen Bogenverzahnung bzw. eines Kleeblattprofils ausgebildet ist. Ein weiteres Lenkspindelteil, welches mit einem korrespondierenden Profil versehen ist, kann in das Lenkspindelteil eingesteckt werden und ist mit dem Abschnitt 19 in Längsrichtung verschiebbar verbunden, aber gegen eine Verdrehung formschlüssig gesichert. Die Verformung des Rohrs 8 im Abschnitt 19 kann vor oder nach der gemeinsamen Verformung des Endabschnitts 9 des Rohrs 8 und der Hülse 10 durchgeführt werden.

In weiteren Abschnitten 20, 21 seiner Längserstreckung wird das Lenkspindelteil vom Rohr 8 in seiner ursprünglichen Form gebildet. Das Rohr 8 muss somit nur über Teile seiner Längserstreckung umformend bearbeitet werden.

Im Verbindungsabschnitt 12 ist die insgesamte Wandstärke D des Lenkspindelteils größer als die Wandstärke d im an den Verbindungsabschnitt 12 anschließenden Abschnitt 21.

Die Materialstärke (Wanddicke) und Länge der Hülse 10 können je nach den Erfordernissen für die insgesamte Wandstärke und/oder Länge des Verbindungsabschnitts 12 ausgewählt werden.

Unterschiedliche weitere Modifikationen des gezeigten Ausführungsbeispiels der Erfindung sind denkbar und möglich, ohne den Bereich der Erfindung zu verlassen. So könnten im Verbindungsabschnitt 12 andere Verbindungselemente als das Innengewinde 17 der Hülse 10 und die Außenverzahnung 18 des Rohrs 8 eingesetzt werden. Beispielsweise könnte die Verzahnung auch an der Innenwand 16 der Hülse 10 angebracht werden und das Gewinde an der Außenwand des Rohrs 8. Anstelle einer Verzahnung könnte auch eine polygonale Kontur, beispielsweise ein Sechskant eingesetzt werden. Die Verzahnung und/oder polygonale Kontur könnte/n auch in einem konischen Abschnitt angeordnet sein bzw. sich über einen solchen erstrecken. Ein Beispiel für eine derartige alternative Ausführungsform ist in der Figur 10 dargestellt. In diesem Beispiel ist an der äußeren Umfangskontur ein sechseckiger Querschnitt, der sich kontinuierlich über einen Konusabschnitt 14 zum Ende der Lenkspindel hin verjüngt. Im Innern ist ein Gewinde ausgebildet.

Anstelle von einfachen polygonalen Querschnittskonturen können auch Querschnittskonturen entsprechend von Bogenvielecken an dem entsprechenden Teil des Verbindungsabschnittes 12 ausgebildet sein.

Alternativ sind auch Ausführungsformen des Verbindungsabschnitts 12 denkbar und möglich, bei denen überhaupt kein Gewinde, weder außen noch innen, ausgebildet ist. Auch können an der Außenwand spezielle umlaufende oder nichtumlaufende Einkerbungen als entsprechende Verbindungselemente vorgesehen sein. Dabei kann der Verbindungsabschnitt sogar soweit umgeformt werden, dass er, zumindest in einem Teil seiner Längserstreckung, im innern nicht mehr hohl ausgebildet ist, das heißt der Innendurchmesser der Hülse wird bis auf Null oder zumindest nahezu Null verringert.

Obwohl der Verbindungsabschnitt 12 des Lenkspindelteils im Zusammenhang mit einer Lenkradbefestigung beschrieben worden ist, könnte ein erfindungsgemäßer Verbindungsabschnitt auch zur Verbindung zwischen dem Lenkspindelteil und anderen Teilen der Lenkspindel eingesetzt werden, beispielsweise zur Befestigung der Gabel eines Kardangelenks.

### Legende

zu den Hinweisziffern:
- 1: Verbindungsabschnitt
- 2: hohlzylinderförmiger Abschnitt
- 3: Innengewinde
- 4: konischer Abschnitt
- 5: Abschnitt
- 6: Außenverzahnung
- 7: Abschnitt
- 8: Rohr
- 9: Endabschnitt
- 10: Hülse
- 11: Innenwand
- 12: Verbindungsabschnitt
- 13: hohlzylinderförmiger Abschnitt
- 14: konischer Abschnitt
- 15: hohlzylinderförmiger Abschnitt
- 16: Innenwand
- 17: Innengewinde
- 18: Außenverzahnung
- 19: Abschnitt
- 20: Abschnitt
- 21: Abschnitt
- 22: Rändelung

## Patentansprüche

1. Verfahren zur Herstellung eines Lenkspindelteils, welches einen Abschnitt einer Lenkspindel für ein Kraftfahrzeug bildet und in Form einer Hohlwelle ausgebildet ist und zumindest anschließend an eines seiner Enden einen Verbindungsabschnitt (12) aufweist, der zumindest über einen Teil seiner Länge eine gegenüber einem an den Verbindungsabschnitt anschließenden Abschnitt (21) des Lenkspindelteils vergrößerte Wandstärke (D) aufweist, wobei zur Herstellung des Lenkspindelteils ein zunächst hohlzylinderförmiges Rohr als Ausgangsprodukt verwendet wird, das zumindest abschnittsweise umgeformt wird, wobei zur Ausbildung des Verbindungsabschnitts (12) in einen Endabschnitt (9) des Rohrs (8) eine Hülse (10) eingepresst wird und im Weiteren der Endabschnitt (9) des Rohrs (8) und die Hülse (10) gemeinsam umgeformt werden, **dadurch gekennzeichnet, dass** ein Fließen des Materials des Rohrs (8) und der Hülse (10) erfolgt und die Hülse (10) außen vor ihrem Einpressen in den Endabschnitt (9) des Rohrs (8) mit einer Rändelung (22) bzw. Umfangsverzahnung versehen ist.

2. Verfahren nach Anspruch 1, **dadurch gekennzeichnet, dass** das Ende des Rohrs (8) und ein Ende der Hülse (10) nach deren Einpressen in das Rohr (8) zueinander bündig sind.

3. Verfahren nach Anspruch 1 oder 2, **dadurch gekennzeichnet, dass** bei der gemeinsamen Umformung des Endabschnitts (9) des Rohrs (8) und der Hülse (10) ihre Außen- und Innendurchmesser zumindest über einen Abschnitt ihrer gemeinsamen Längserstreckung verringert werden.

4. Verfahren nach einem der Ansprüche 1 bis 3, **dadurch gekennzeichnet, dass** durch die gemeinsame Umformung des Endabschnitts (9) des Rohrs (8) und der Hülse (10) ein gegen ein Herausziehen der Hülse (10) aus demjenigen Ende des Rohrs (8), bei welchem die Hülse (10) angeordnet ist, wirkender Formschluss zwischen dem Rohr (8) und der Hülse (10) ausgebildet wird.

5. Verfahren nach einem der Ansprüche 1 bis 4, **dadurch gekennzeichnet, dass** nach der gemeinsamen Umformung des Endabschnitts (9) des Rohrs (8) und der Hülse (10) die Innenwand (16) der Hülse (10) zumindest in einem an das Ende des Lenksäulenteils anschließenden Abschnitt zylindermantelförmig ausgebildet ist.

6. Verfahren nach Anspruch 5, **dadurch gekennzeichnet, dass** nach dem gemeinsamen Umformen des Endabschnitts (9) des Rohrs (8) und der Hülse (10) ein Innengewinde (17) in die Innenwand (16) der Hülse (10) eingebracht wird.

7. Verfahren nach einem der Ansprüche 1 bis 6, **dadurch gekennzeichnet, dass** die gemeinsame Umformung des Endabschnitts (9) des Rohrs (8) und der Hülse (10) durch Druckumformen erfolgt, wobei als Druckumform-Verfahren vorzugsweise Hämmern und/oder Kneten eingesetzt wird.

8. Verfahren nach einem der Ansprüche 1 bis 7, **dadurch gekennzeichnet, dass** bei der gemeinsamen Umformung des Endabschnitts (9) des Rohrs (8) und der Hülse (10) ein zum benachbarten Ende des Rohrs (8) hin sich verjüngender konischer Abschnitt (14) des Lenksäulenteils und ein gegenüber diesem weiter in Richtung zum benachbarten Ende des Rohrs (8) gelegener hohlzylindrischer Abschnitt (13) ausgebildet wird.

9. Verfahren nach Anspruch 8, **dadurch gekennzeichnet, dass** nach der gemeinsamen Umformung des Endabschnitts (9) des Rohrs (8) und der Hülse (10) das Rohr (8) im Bereich des hohlzylindrischen Abschnitts (13) mit einer Außenverzahnung (18) versehen wird.

## Claims

1. A method for the production of a steering shaft part which forms a section of a steering shaft for a motor vehicle and is in the form of a hollow shaft and has a connection section (12) at least adjoining one of its ends, which section has, at least over a portion of its length, a wall thickness (D) which is enlarged compared with a section (21) of the steering shaft part which adjoins the connection section, with an initially hollow-cylindrical tube being used as starting product for producing the steering shaft part, which tube is deformed at least in sections, **characterised in that** a sleeve (10) is pressed into an end section (9) of the tube (8) for forming the connection section (12) and subsequently the end section (9) of the tube (8) and the sleeve (10) are jointly deformed, with flowing of the material of the tube (8) and of the sleeve (10) taking place and the sleeve (10) being provided externally with knurling (22) or peripheral teeth before being pressed into the end section (9) of the tube (8).

2. A method according to Claim 1, **characterised in that** the end of the tube (8) and one end of the sleeve (10) are flush with each other once they have been pressed into the tube (8).

3. A method according to Claim 1 or 2, **characterised in that** upon the joint deformation of the end section (9) of the tube (8) and of the sleeve (10) their external and internal diameters are reduced at least over a section of their common longitudinal extent.

4. A method according to one of Claims 1 to 3, **characterised in that** a positive lock between the tube (8) and the sleeve (10) which acts to counter the sleeve (10) being pulled out from the end of the tube (8) at which the sleeve (10) is arranged is formed owing to the joint deformation of the end section (9) of the tube (8) and of the sleeve (10).

5. A method according to one of Claims 1 to 4, **characterised in that** after the joint deformation of the end section (9) of the tube (8) and of the sleeve (10) the inner wall (16) of the sleeve (10) is formed in the manner of a cylindrical casing at least in a section adjoining the end of the steering column part.

6. A method according to Claim 5, **characterised in that** after the joint deformation of the end section (9) of the tube (8) and of the sleeve (10) an internal thread (17) is formed in the inner wall (16) of the sleeve (10).

7. A method according to one of Claims 1 to 6, **characterised in that** the joint deformation of the end section (9) of the tube (8) and of the sleeve (10) takes place by compressive deformation, with preferably hammering and/or squeezing being used as compressive deformation method.

8. A method according to one of Claims 1 to 7, **characterised in that** upon the joint deformation of the end section (9) of the tube (8) and of the sleeve (10) a conical section (14) of the steering column part tapering towards the adjacent end of the tube (8) and a hollow-cylindrical section (13) located relative to said section further towards the adjacent end of the tube (8) is formed.

9. A method according to Claim 8, **characterised in that** after the joint deformation of the end section (9) of the tube (8) and of the sleeve (10) the tube (8) is provided with external teeth (18) in the region of the hollow-cylindrical section (13).

## Revendications

1. Procédé de fabrication d'une pièce de colonne de direction constituant un segment d'une colonne de direction de véhicule automobile, réalisée sous la forme d'un arbre creux et ayant à l'une de ses extrémités, un segment de liaison (12) ayant au moins sur une partie de sa longueur, une épaisseur de paroi (D), augmentée, par rapport à celle du segment (21) de la pièce de colonne de direction, adjacent au segment de liaison,
et pour fabriquer la pièce de colonne de direction, on utilise comme produit de départ, un tube ayant tout d'abord une forme de cylindre creux,
on déforme ce tube au moins par segment,
procédé **caractérisé en ce que**
pour réaliser le segment de liaison (12), on presse d'abord un manchon (10) dans un segment d'extrémité (9) du tube (8), et
ensuite, on transforme en commun le segment d'extrémité (9) du tube (8) et le manchon (10), se traduisant par un fluage de la matière du tube (8) et du manchon (10), et
avant d'être pressé dans le segment d'extrémité (9) du tube (8), le manchon (10) est muni extérieurement d'un moletage (22) ou d'une denture périphérique.

2. Procédé selon la revendication 1,
**caractérisé en ce que**
l'extrémité du tube (8) et une extrémité du manchon (10) sont à niveau l'une par rapport à l'autre après enfoncement dans le tube (8).

3. Procédé selon la revendication 1 ou 2,
**caractérisé en ce que**
pour la transformation commune du segment d'extrémité (9) du tube (8) et du manchon (10), on diminue leur diamètre extérieur et leur diamètre intérieur, au moins sur une partie de leur extension longitudinale commune.

4. Procédé selon l'une des revendications 1 à 3,
**caractérisé en ce que**
par la transformation commune du segment d'extrémité (9) du tube (8) et du manchon (10), on réalise une liaison par la forme entre le tube (8) et le manchon (10) pour s'opposer à l'extraction du manchon (10) hors de l'extrémité du tube (8) munie du manchon (10).

5. Procédé selon l'une des revendications 1 à 4,
**caractérisé en ce qu'**
après la transformation commune du segment d'extrémité (9) du tube (8) et du manchon (10), on réalise la paroi intérieure (16) du manchon (10) au moins sous la forme d'un segment d'enveloppe cylindrique adjacent à une extrémité de la pièce de colonne de direction.

6. Procédé selon la revendication 5,
**caractérisé en ce qu'**
après la transformation commune du segment d'extrémité (9) du tube (8) et du manchon (10), on réalise un filetage intérieur (17) dans la paroi intérieure (16) du manchon (10).

7. Procédé selon l'une des revendications 1 à 6,
**caractérisé en ce que**
la transformation commune du segment d'extrémité (9) du tube (8) et du manchon (10) se fait par une transformation sous pression,
le procédé de transformation sous pression utilisant de préférence le martelage et/ou le foulage.

8. Procédé selon l'une des revendications 1 à 7,
**caractérisé en ce que**
lors de la transformation en commun du segment d'extrémité (9) du tube (8) et du manchon (10), on réalise un segment conique (14) de la pièce de colonne de direction, qui va en diminuant en direction de l'extrémité voisine du tube (8), et un segment cylindrique creux (13) situé plus loin en direction de l'extrémité voisine du tube (8), par rapport au segment ci-dessus.

9. Procédé selon la revendication 8,
**caractérisé en ce qu'**
après la transformation commune du segment d'extrémité (9) du tube (8) et du manchon (10), le tube (8) reçoit une denture extérieure (18) dans la zone du segment cylindrique creux (13).
